# EUROPÄISCHE PATENTSCHRIFT

(11) **EP 3 551 401 B1**
(45) Veröffentlichungstag und Bekanntmachung des Hinweises auf die Patenterteilung: **08.01.2025**
(21) Anmeldenummer: 17798182.6
(22) Anmeldetag: 09.11.2017
(51) Int. Cl.: B26D 3/08, B60R 21/2165, B62D 25/14, B05C 5/02

(54) **VERFAHREN ZUM EINBRINGEN EINES APPLIKATIONSMEDIUMS IN EINEN SCHWÄCHUNGSSPALT EINER ABDECKUNG SOWIE BEVORZUGTE APPLIKATIONSVORRICHTUNG**
METHOD FOR INTRODUCING AN APPLICATION MEDIUM INTO A WEAKENING GAP OF A COVER, AND PREFERRED APPLICATION DEVICE
PROCÉDÉ D'INTRODUCTION D'UN FLUIDE D'APPLICATION DANS UNE FISSURE D'AFFAIBLISSEMENT D'UN ÉLÉMENT DE RECOUVREMENT AINSI QUE SYSTÈME D'APPLICATION PRÉFÉRÉ

(30) Priorität: 06.12.2016 DE 102016123579
(43) Veröffentlichungstag der Anmeldung: 16.10.2019
(73) Patentinhaber: KraussMaffei Technologies GmbH, 85599 Parsdorf (DE)
(72) Erfinder: EICKENS, Sebastian, 47625 Kevelaer (DE)
(74) Vertreter: Käufl, Florian Johannes
(86) Internationale Anmeldenummer: PCT/EP2017/078788
(87) Internationale Veröffentlichungsnummer: WO 2018/103998

(56) Entgegenhaltungen:
- WO-A1-2008/141877
- DE-A1- 2 055 127
- DE-B3- 102005 050 940
- DE-U1- 202007 017 917
- DE-U1- 29 806 498
- FR-A1- 2 820 060
- JP-A- 2008 284 653
- JP-B2- 4 939 167
- US-A- 2 207 100
- US-A- 4 157 149
- US-A1- 2006 049 065

## Beschreibung

Die Erfindung betrifft ein Verfahren zum Einbringen eines Applikationsmediums (flüssig oder fest (etwa als Pulver)) in einen Schwächungsspalt einer Abdeckung / flächigen Werkstückes, wie einer Abdeckfolie / Dekorfolie oder Abdeckhaut / Dekorhaut. Die Abdeckung an sich ist bevorzugt zur Verwendung in einem Kraftfahrzeug, insbesondere in einer Instrumententafel eines Kraftfahrzeuges, bspw. als äußere Abdeckung eines Airbags zum Fahrzeuginsassen hin, ausgeführt. Zudem betrifft die Erfindung ein Verfahren zum Ausbilden eines Schwächungsspaltes in einer Abdeckung.

Für bestimmte Anwendungsbereiche ist es erforderlich, in flächige Elemente Schwächungsspalte, etwa in Form von Schwächungsschnitten einzubringen, die beispielsweise eine Sollbruchstelle definieren. Ein Anwendungsbereich ist die Herstellung von Instrumententafeln für Kraftfahrzeuge mit einem integrierten Airbag, wobei beim Auslösen des Airbags die Instrumententafel an der bezeichneten Stelle, insbesondere den Schwächungsstellen aufgebrochen wird, so dass der Airbag austreten kann.

Unter der verwendeten Begrifflichkeit "Folie" oder "Haut" sind Kunststoffhäute, -folien oder entsprechende flächige Werkstücke zu verstehen, bei denen es Ziel ist, das Material von einer Seite so einzuschneiden, dass eine definierte Restwandstärke, unabhängig von der ggf. örtlich schwankenden Wandstärke sowie den Toleranzen einer robotergeführten oder durch andere Bewegungsautomaten, wie zum Beispiel CNC-Maschinen, durchgeführten Relativbewegung von Werkzeug zu Werkstück, entsteht. Gerade bei der Einbringung einer Schwächung in die Häute von Automobil-Instrumententafeln im Bereich der Airbags, die als Sicherheitsbauteile anzusehen sind, ist eine hohe Genauigkeit des Schnittes, eine hohe Prozesssicherheit und eine gute Prozessdokumentation von Bedeutung.

Die Einbringung von trennenden Medien / Applikationsmedien ist immer dann erforderlich, wenn davon ausgegangen werden muss, dass das Folienbasismaterial dazu neigt, einem Selbstheilungseffekt zu unterliegen. D.h. der Schwächungsschnitt verschließt sich unter Einfluss von Umgebungsfaktoren, wie Temperatur, Alterung oder chemischer Reaktion, oder auch ohne äußere Einflussfaktoren wieder. Dieser Effekt kann sehr schnell, d.h. in kurzem Zeitabstand zum Trennvorgang, einsetzen, oder aber erst nach Jahren erfolgen. Besonders betroffen sind Polyurethan als auch PVC basierende Abdeckungen / Folien.

Um diesen Effekt des Wiederverschließens der Schwächung zu verhindern, werden die Flanken des Schnittes häufig mit einem Trennmedium benetzt. Dieses Medium wirkt als Abstandshalter zwischen den Schnittflanken. Ein weiterer Grund für den Trennmedieneinsatz kann auch ein Verhindern der Anhaftung des im Instrumententafelbau eingesetzten PU- Materials sein. Dadurch, dass die Schnittflanken mit dem Trennmedium benetzt sind, kann auch das eingesetzte PU-Material nicht an diesen Schnittflanken und in unmittelbarer Nähe des Schwächungsspaltes anhaften oder die Schnittflanken miteinander verkleben und dadurch die Schwächungswirkung (Sollbruchstellenwirkung) des Schnittes beeinflussen.

Gleichermaßen könnte aber das vorliegende Verfahren auch dazu verwendet werden, den Schwächungsverlauf zu versiegeln. D.h. es wird kein Trennmedium, sondern ein gezieltes Verkleben durch einen geeigneten Klebstoff oder einen Versiegelungslack durchgeführt. Dies findet dann Anwendung, wenn die Erfindung primär dazu dienen soll, das Eindringen von PU-Material in den Schwächungsschnitt im Folgeprozessschritt des Instrumententafelaufbaus zu verhindern.

Gattungsgemäßer Stand der Technik ist bereits hinlänglich bekannt. In diesem Zusammenhang offenbart etwa die DE 10 2005 050 940 B3 eine Vorrichtung zum Einschneiden einer Schwächungslinie in eine Folie. Die Vorrichtung umfasst eine Klinge mit einer in Schnittrichtung zeigenden Klingenspitze, einem Klingenhalter und einem Kanal zur Zuführung einer Flüssigkeit hinter der Klingenspitze in die Schwächungslinie.

Eine rein zur Einbringung eines Schwächungsschnittes in eine Folie oder Haut ausgebildete Vorrichtung ist aus der DE 10 2006 034 287 B3 bekannt.

Ferner offenbart die WO 2008/141877 A1 ein Verfahren und eine Vorrichtung zum Schwächen eines Werkstücks und die DE 20 2007 017 917 U1 ein Schneidwerkzeug.

Weiterhin offenbart die JP 2008-284653 A ein Verfahren und eine Vorrichtung mit einer Applikationsvorrichtung zum Einbringen eines Applikationsmediums in einen Schwächungsspalt eines Airbags.

Aus der US 2 207 100 A ist ein Verfahren zum Herstellen von Laufflächenstreifen bekannt, die mit Schnitten versehen werden, in welche ein Applikationsmedium eingebracht wird.

Die JP4 939167 B2 beschreibt ein Verfahren und eine Vorrichtung mit einer Applikationsvorrichtung zum Einbringen eines Applikationsmediums in einen Schwächungsspalt, insbesondere eines Airbags.

Ein aus dem Stand der Technik bekanntes Verfahren zum Einbringen eines Trennmediums ist folglich so ausgeführt, dass das Trennmedium während des Schneidvorgangs über die Schneidklinge oder am Schneidkopf mitgeführte Dosierröhrchen im Bereich des unmittelbaren Schneidvorganges appliziert wird. Dies bedeutet, dass die Schneidklinge bzw. der Schneidkopf mit dem Dosierröhrchen unmittelbar als Applikator des Trennmittels eingesetzt ist.

Dabei hat es sich jedoch als Nachteil herausgestellt, dass der Trennmitteleintrag unmittelbar mit dem Schneidprozess verbunden ist. Diese Anordnung führt dazu, dass alle Störungen aus der Trennmittelapplikation direkten Einfluss auf den Schneidprozess und die Bewertung des Bauteils haben. Zudem kann der Schwächungsspalt nur mit Trennmittel benetzt werden, wenn das Medium über die Klinge in Verbindung mit dem Schneidprozess appliziert wird. Es ergeben sich daher Nachteile bei den Prozessüberwachungsmöglichkeiten, bei der Prozessführung und bei der Programmierung der Applikation sowie eine störungsanfälligere Dosiertechnik.

Es ist daher die Aufgabe der vorliegenden Erfindung, die aus dem Stand der Technik bekannten Nachteile zu beheben und insbesondere die Prozessstabilität beim Aufbringen eines Applikationsmediums in einen Schwächungsspalt einer Abdeckung zu verbessern.

Dies wird erfindungsgemäß durch die Merkmale des Anspruchs 1 gelöst, wobei ein Verfahren zum Einbringen eines Applikationsmediums in einen Schwächungsspalt einer Abdeckung, wie einer Abdeckfolie oder Abdeckhaut, beansprucht ist, wobei eine Abdeckung zur Verfügung gestellt wird, die bereits auf einer ersten Seite einen in seiner Länge vollständig ausgebildeten Schwächungsspalt aufweist, eine (zum Auftragen des Applikationsmediums vorbereiteter) Applikationseinrichtung zur ersten Seite hin, beabstandet zur Abdeckung sowie oberhalb des Schwächungsspaltes positioniert wird, und ein Auflager auf einer, der Applikationseinrichtung abgewandten, zweiten Seite der Abdeckung abstützend angeordnet ist, und die Abdeckung derart an dem Auflager angelegt wird, dass der Schwächungsspalt in einem Abschnitt, der einem an dem Auflager angelegten Auflagebereich gegenüberliegt, lokal in Richtung der Applikationseinrichtung hin aufklappt, und ein Auftragen des Applikationsmediums durch die Applikationseinrichtung in den Schwächungsspalt hinein stattfindet, wobei das Auflagereinen Wälzkörper in Form einer Wälzkugel aufweist, mit dem es während des Einbringens des Applikationsmediums gegen die Abdeckung gedrückt ist und mit dem die Abdeckung während des Einbringens des Applikationsmediums im wälzenden Kontakt steht.

Somit ist der Applikationsvorgang gegenüber dem Einbringungsvorgang des Schwächungsspaltes klar separiert, sodass sich die beiden Vorgänge nicht unmittelbar beeinflussen. Die Applikation des Applikationsmediums ist vom Schneidprozess klar entkoppelt. Dies ermöglicht einen separaten, von dem Schneidprozess unabhängigen Arbeitsvorgang, der jedoch innerhalb einer Anlage durchführbar ist. Weiterhin wird die Abdeckung dadurch besonders schonend an dem Auflager geführt. Die Prozessstabilität wird dadurch wesentlich verbessert.

Weitere vorteilhafte Ausführungsformen sind in den Unteransprüchen beansprucht und nachfolgend näher erläutert.

In dem umgesetzten Verfahren können somit folgende Zustände zeitgleich vorliegen: Die durch einen (abgeschlossenen) Schneidvorgang bearbeitete Abdeckung liegt vor. Zudem ist ein Applikationskopf oberhalb der Abdeckung, auf der ersten Seite der Abdeckung, d.h. der Seite des Schwächungsspaltes, angeordnet. Wiederum zeitgleich damit wird das Auflager an die Abdeckung an die dem Schwächungsspalt abgewandte (zweite) Seite herangeführt, so dass der Schwächungsspalt aufklappt. Wenn diese drei Bedingungen erfüllt sind, kann über den Applikationskopf das Trennmedium appliziert werden. Dieser Zustand wird über den gesamten Bahnverlauf des Schwächungsspaltes erhalten und durch den Bewegungsautomaten oder einer anderen Vorschubeinheit entlang des Schwächungsverlaufes vorwärts bewegt.

Besonders vorteilhaft ist es, wenn die Abdeckung derart an dem Auflager (vorzugsweise unter Vorspannung / vorgespannt) angelegt wird, dass der Schwächungsspalt in einem Abschnitt, der einem an dem Auflager angelegten Auflagebereich gegenüberliegt, lokal in Richtung der Applikationseinrichtung hin aufklappt / sich erweitert (sodass das Applikationsmedium in den aufgeklappten Schwächungsspalt / auf die Flanken des aufgeklappten Schwächungsspaltes appliziert/gespritzt wird). In anderen Worten ausgedrückt, wird dadurch der Schnittspalt (Schwächungsspalt), der durch den vorangegangenen Schneidprozess entstanden ist, mit einem Werkzeug (Applikationsvorrichtung) automatisch derart aufgeklappt, dass ein Einbringen, wie ein Einsprühen, des Applikationsmediums in den Schwächungsspalt ermöglicht wird. Dadurch wird ein weitestgehend vollständiges Benetzen des Schwächungsspaltes durch das Applikationsmedium umgesetzt. Hierbei ist es prinzipiell möglich, das Auflager sowie die Applikationseinrichtung in einer gemeinsamen Applikationsvorrichtung vorzusehen und durch eine geeignete Anhebung der gesamten Applikationsvorrichtung, etwa durch einen Bewegungsautomaten, die Abdeckung ebenfalls anzuheben, wobei die Abdeckung dann bevorzugt in einer Vorrichtung / Produktaufnahme fixiert ist, sodass der Schwächungsspalt minimal aufklappt. Weitere Aufnahmearten sind jedoch prinzipiell denkbar.

In einer Variante kann die Applikationseinrichtung als Applikationskopf, beispielsweise als Sprühkopf, ausgebildet sein. Die Applikationseinrichtung oder der Applikationskopf kann eine Applikationsdüse, beispielsweise eine Sprühdüse, aufweisen.

Besonders zweckmäßig ist es, wenn der Austrag des Applikationsmediums durch eine Tropfenüberwachung nach dem Austritt des Applikationsmediums aus einer Applikationsdüse der als Applikationskopf ausgebildeten Applikationseinrichtung (messtechnisch) überwacht wird.

Wird das Auflager federelastisch an die zweite Seite der Abdeckung angedrückt, kann die Abdeckung im Bereich des Schwächungsspaltes mit einer vorbestimmten Kraft möglichst gleichmäßig vorgespannt werden.

Ist das Applikationsmedium ein Trennmittel oder ein den Schwächungsspalt vorübergehend zumindest teilweise, weiter bevorzugt vollständig, wieder verschließendes Klebemittel, das besonders bevorzugt zur anschließenden Wiedertrennung ausgestaltet ist, ist das Applikationsmedium besonders für den Einsatz in einer Sollbruchstelle geeignet.

Hinsichtlich des Auflagers ist es zudem vorteilhaft, wenn das Auflager eine Gleit- oder Wälzlagerung aufweist, mit der die Abdeckung während des Einbringens des Applikationsmediums im wälzenden / gleitenden Kontakt steht. Erfindungsgemäß ist es dabei, wenn das Auflager einen Wälzkörper in Form einer Wälzkugel aufweist, mit dem es während des Einbringens des Applikationsmediums gegen die Abdeckung gedrückt ist und mit dem die Abdeckung während des Einbringens des Applikationsmediums im wälzenden Kontakt steht. Dadurch wird die Abdeckung besonders schonend an dem Auflager geführt. Diesbezüglich ist es jedoch auch prinzipiell möglich, andere Auflager, so z.B. integral mit einem Auflagetisch ausgebildete Oberflächen, bevorzugt konvexe Oberflächen, oder räumlich verfahrbare Blöcke, einzusetzen.

Vorteilhaft ist es auch, wenn die Abdeckung derart relativ zu der Applikationseinrichtung und/oder die Applikationseinrichtung derart relativ zu der Abdeckung verschoben werden/wird, dass ein Abstand zwischen der Applikationseinrichtung und der Abdeckung in einem Verschiebeweg entlang des Schwächungsspaltes konstant gehalten wird. Demgemäß wird ein Verfahren mit einer Einrichtung vorgesehen, durch die der Abstand zwischen der Applikationseinrichtung und einem Auflager entlang dem Schwächungsspalt / der Schneidachse konstant ausgebildet wird. Ist der Abstand zwischen dem Auflager und der Applikationseinrichtung konstant und stützt sich die Abdeckung kontinuierlich gegen das Auflager ab, so führt dies zu einer besonders konstanten Applikationsbreite des Mediums auf der Abdeckung. Ein berührungsloser Auftrag des Applikationsmediums durch einen Applikationsvorgang ist dadurch realisiert. Die Prozessführung wird dadurch wesentlich verbessert.

Ist eine Steuerungs- und/oder Regelungseinrichtung vorhanden, die den Abstand zwischen der Applikationseinrichtung und der Abdeckung im Verschiebeweg entlang des Schwächungsspaltes konstant hält, ist der Abstand besonders verlässlich ansteuerbar.

In diesem Zusammenhang ist es auch vorteilhaft, wenn die Steuerungs- und/oder Regelungseinrichtung eine Position der Applikationseinrichtung sowie eine Position des Auflagers erfasst und in Abhängigkeit dieser Position die Applikationseinrichtung relativ zu dem Auflager, unter Beibehaltung eines vorbestimmten Abstandes zwischen der Abdeckung und der Applikationseinrichtung, verstellt. Dadurch ist die Steuerung / Regelung des Abstandes besonders effektiv umgesetzt.

Weiterhin von Vorteil ist es, wenn die Applikationseinrichtung während des Auftragens des Applikationsmediums mittelbar oder unmittelbar mit dem Auflager verbunden / gekoppelt oder fest relativ zu dem Auflager geführt ist. Dadurch wird der Abstand zwischen Applikationseinrichtung und Abdeckung einfach konstant gehalten.

Diesbezüglich ist es besonders zweckmäßig, wenn die Applikationseinrichtung mit dem Auflager mechanisch, vorzugsweise über eine bügelartige Verbindungseinrichtung (beispielsweise ein C- oder U-Rahmen), gekoppelt ist. In diesem Zusammenhang ist es weiter bevorzugt, die Verbindungseinrichtung mehrteilig auszubilden. An einem ersten Bestandteil der Verbindungseinrichtung ist dann die Applikationseinrichtung montiert, wohingegen an einem zweiten Bestandteil der Verbindungseinrichtung das Auflager angebracht ist. Weiter bevorzugt sind diese beiden Bestandteile relativ zueinander verschiebbar und/oder verschwenkbar. Des Weiteren ist es in diesem Zusammenhang auch vorteilhaft, wenn die beiden Bestandteile elektromotorisch, hydraulisch und/oder pneumatisch relativ zueinander verschiebbar und/oder verschwenkbar sind.

Zudem betrifft die Erfindung ein Verfahren zum Bearbeiten einer Abdeckung, wie einer Abdeckfolie oder Abdeckhaut, wobei zunächst auf einer ersten Seite der Abdeckung ein Schwächungsspalt mittels eines Trennwerkzeuges vollständig eingebracht wird, und anschließend, nach Entfernen des Trennwerkzeuges von der Abdeckung, das Verfahren nach einer der zuvor beschriebenen Ausführungen durchgeführt wird.

Die Erfindung wird nun nachfolgend anhand von Figuren in Verbindung mit verschiedenen Ausführungsbeispielen näher erläutert.

Es zeigen:

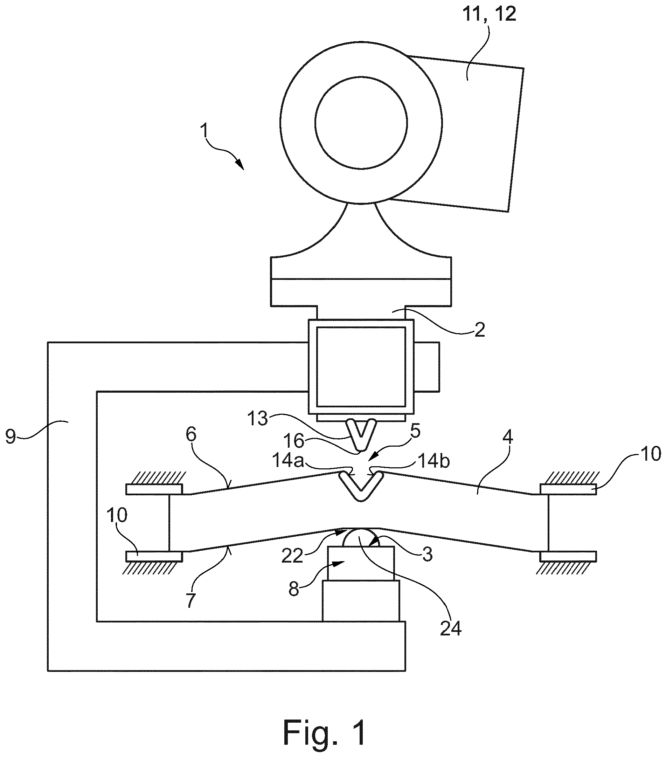

- Fig. 1: eine Seitenansicht einer Applikationsvorrichtung nach einem ersten Ausführungsbeispiel, die zum Durchführen eines erfindungsgemäßen Verfahrens zum Einbringen eines Applikationsmediums in einen Schwächungsspalt an einer Abdeckung bereits angeordnet ist, wobei ein Auflager der Applikationsvorrichtung gegen eine einem Applikationskopf abgewandte (zweite) Seite der Abdeckung angedrückt ist, sodass ein Schwächungsspalt auf einer dem Applikationskopf zugewandten (ersten) Seite der Abdeckung aufgeklappt ist,

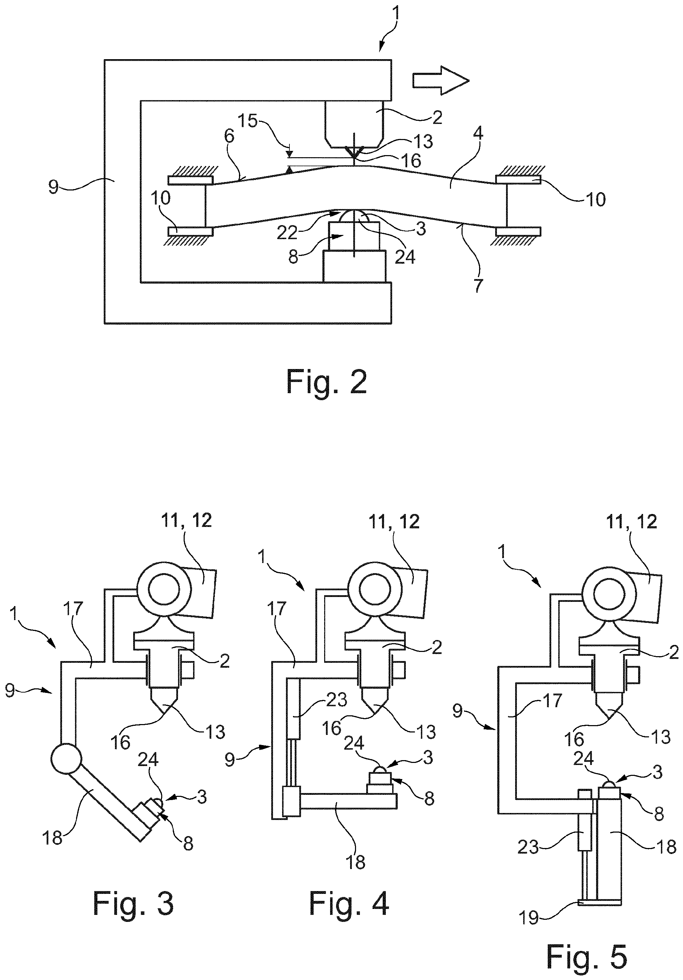

- Fig. 2: eine Seitenansicht der Anordnung aus Applikationsvorrichtung und Abdeckung nach Fig. 1, wobei die Anordnung nicht wie in Fig. 1 in einer Darstellungsebene senkrecht zum Schwächungsspalt, sondern in einer Darstellungsebene längs des Schwächungsspaltes abgebildet ist,
- Fig. 3: eine Seitenansicht einer Applikationsvorrichtung zum Durchführen des erfindungsgemäßen Verfahrens nach einem zweiten Ausführungsbeispiel, wobei zwei Bestandteile einer den Applikationskopf mit dem Auflager koppelnden Verbindungseinrichtung der Applikationsvorrichtung gelenkig miteinander verbunden sind,
- Fig. 4: eine Seitenansicht einer Applikationsvorrichtung zum Durchführen des erfindungsgemäßen Verfahrens nach einem dritten Ausführungsbeispiel, wobei ein das Auflager aufnehmender Bestandteil der Verbindungseinrichtung pneumatisch relativ zu einem den Applikationskopf aufnehmenden Bestandteil der Verbindungseinrichtung verschiebbar ist,
- Fig. 5: eine Seitenansicht einer Applikationsvorrichtung zum Durchführen des erfindungsgemäßen Verfahrens nach einem vierten Ausführungsbeispiel, wobei ein den Applikationskopf aufnehmender Bestandteil der Verbindungseinrichtung pneumatisch relativ zu einem das Auflager aufnehmenden Bestandteil der Verbindungseinrichtung verschiebbar ist,

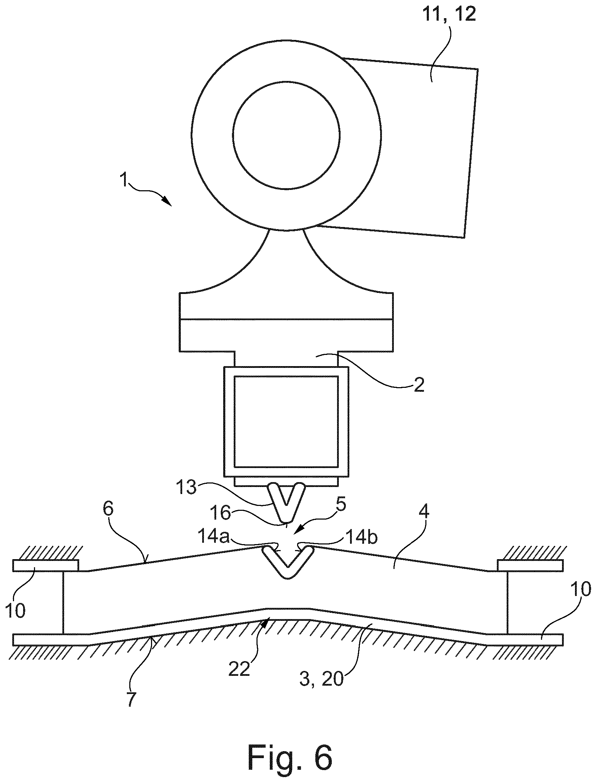

- Fig. 6: eine Seitenansicht einer Anordnung aus einer Applikationsvorrichtung und einem separat von der Applikationsvorrichtung ausgebildeten Auflager zum Durchführen eines nicht erfindungsgemäßen Verfahrens, wobei die Applikationsvorrichtung nun lediglich einen an einem Bewegungsautomaten angebrachten Applikationskopf aufweist und das Auflager in Form einer konvex gewölbten Oberfläche eines Auflagetisches ausgebildet ist, und

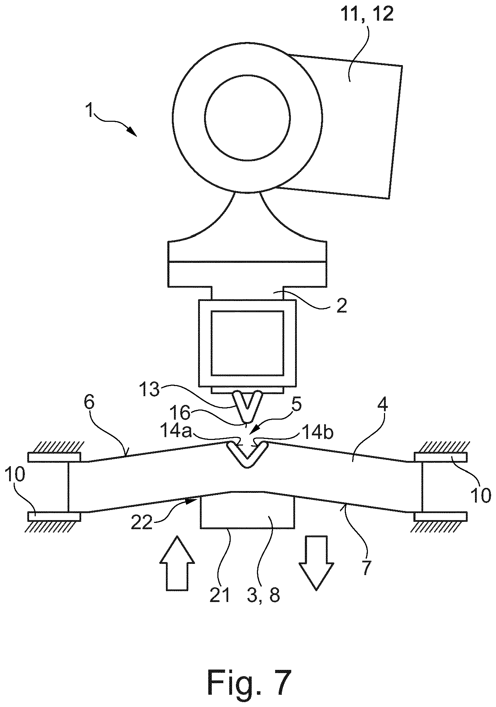

- Fig. 7: eine Seitenansicht einer Anordnung aus einer Applikationsvorrichtung und einem separat von der Applikationsvorrichtung ausgebildeten Auflager zum Durchführen eines nicht erfindungsgemäßen Verfahrens, wobei die Applikationsvorrichtung wiederum lediglich einen an einem Bewegungsautomaten angebrachten Applikationskopf aufweist und das Auflager in Form eines verschiebbaren Abstützblockes ausgebildet ist.

Die Figuren sind lediglich schematischer Natur und dienen ausschließlich dem Verständnis der Erfindung. Die gleichen Elemente sind mit denselben Bezugszeichen versehen. Auch können die einzelnen Merkmale der unterschiedlichen Ausführungsbeispiele frei miteinander kombiniert werden.

In Fig. 1 ist eine bevorzugte Anordnung zum Durchführen eines erfindungsgemäßen Verfahrens veranschaulicht. Die Anordnung weist eine Applikationsvorrichtung 1/ ein Applikationswerkzeug nach einem bevorzugten Ausführungsbeispiel auf. Neben der Applikationsvorrichtung 1 weist die Anordnung eine Grundhalterung 10 auf, in der eine Abdeckung 4 aufgenommen / eingespannt ist. Die Abdeckung 4 bildet ein dünnwandiges, flächiges Werkstück aus. Die Abdeckung 4 ist daher auch alternativ als Abdeckfolie / Dekorfolie oder Abdeckhaut / Dekorhaut bezeichnet. Die Abdeckung 4 ist bevorzugt als Bestandteil einer Instrumententafel eines Kraftfahrzeuges, bspw. als äußere Abdeckung eines Airbags, ausgeführt. Die Abdeckung 4 besteht aus einem Kunststoff. Besonders bevorzugt ist die Abdeckung zumindest teilweise aus einem Polyurethan (PU) und/oder PVC hergestellt, wobei prinzipiell jedoch auch andere Materialien einsetzbar sind.

Des Weiteren weist die in dem erfindungsgemäßen Verfahren bearbeitete Abdeckung 4, wie ebenfalls in Fig. 1 gut zu erkennen, bereits einen sich an einer ersten Seite 6 / Oberfläche erstreckenden Schwächungsspalt 5 auf. Der Schwächungsspalt 5 wird bevorzugt in die Abdeckung 4 eingeschnitten, sodass der Schwächungsspalt 5 auch als Schwächungsschnitt bezeichnet ist.

Die Applikationsvorrichtung 1 an sich ist bevorzugt an einem Bewegungsautomaten 11 anbringbar und in diesem Ausführungsbeispiel auch an einem Arm 12 des Bewegungsautomaten 11, der hier der Übersichtlichkeit halber lediglich abschnittsweise dargestellt ist, angebracht. Der Bewegungsautomat 11 kann als Gelenk-Roboter ausgeführt sein. Alternativ kann der Bewegungsautomat 11 prinzipiell durch jede andere Vorschubeinheit ersetzt werden. Die Applikationsvorrichtung 1 weist eine Einrichtung 2 auf, die in der vorliegenden Ausführung als ein Applikationskopf 2 ausgebildet ist und daher auch nachfolgend als solcher bezeichnet ist. Der Applikationskopf 2 weist insbesondere eine Applikationsdüse 13 / Sprühdüse auf, mittels der das auszutragende Applikationsmedium in den Schwächungsspalt 5 der Abdeckung 4 eingebracht wird. Somit wird das Applikationsmedium bevorzugt mit Druck beaufschlagt durch die Applikationsdüse 13 (Querschnittverengung) aufgebracht. Diesbezüglich sei jedoch darauf hingewiesen, dass der Auftrag prinzipiell unterschiedlich ausgeführt werden kann. So ist in weiteren Ausführungen auch ein druckloser Auftrag, etwa durch ein Einträufeln möglich.

Des Weiteren kann alternativ zum beabstandeten Auftrag des Applikationsmediums, wie durch das Sprühen, ein Kontaktauftrag des Applikationsmediums stattfinden. Bevorzugt wird in einer weiteren, hier der Übersichtlichkeit halber nicht näher dargestellten Ausführungsform, dann ein Applikationsröhrchen oder eine Applikationsschiene (mit oder ohne Kontakt zur Abdeckung 4) statt der Applikationsdüse 13 oder der Applikationsdüse 13 nachgeschaltet oder sogar statt des gesamten Applikationskopfes 2 vorgesehen. Die Applikationsschiene kann (wie ein Profil) im Querschnitt eine C-, V- oder U-förmige Form aufweisen. Das Applikationsröhrchen oder die Applikationsschiene wird dann über die Oberfläche entlang des Schwächungsspaltes 5 geführt. D.h., an der Stelle, an der sich in dem in Fig. 1 dargestellten Ausführungsbeispiel der Applikationskopf 2 befindet, könnte sich auch ein Applikationsröhrchen oder eine Applikationsschiene befinden, welches kontaktlos oder bevorzugt als Schleppröhrchen oder Schleppschiene mit Kontakt über die Oberfläche mit dem Schwächungsspalt 5 durch den Bewegungsautomaten 11 geführt wird. Das Schleppröhrchen oder die Schleppschiene hat gegenüber dem Träufeln den Vorteil, dass keine Tropfenbildung mit Absetzen eines Mengentropfens bei Erreichen der kritischen Ablösemenge am Applikationsröhren oder an der Applikationsschiene erfolgt (diskontinuierlicher Austrag). Stattdessen erfolgt ein kontinuierlicher Austrag über eine Schleppspur des Applikationsmediums auf der Oberfläche der Abdeckung 4 entlang des Schwächungslinienverlaufes. Der Austrag des Applikationsmediums kann in diesem alternativen Ausführungsbeispiel drucklos oder als Druckstrahl erfolgen. Die Austrittsöffnung am Röhrchen oder an der Schiene kann dabei rund oder auch in andere Geometrie ausgeführt sein (etwa flach, eckig oder V-, C-, U- oder O-förmig), um eine Benetzung des Schwächungsspaltverlaufes mit dem Applikationsmedium optimal und in gewünschter geometrischer Ausprägung zu beeinflussen. Diese beschriebene Röhrchenapplikation oder Schienenapplikation ist prinzipiell bei allen Auflagervarianten, insbesondere auch den nachfolgend beschriebenen Ausführungsbeispielen, umsetzbar.

Das Applikationsmedium ist vorzugsweise in Form eines Trennmediums ausgeführt, kann jedoch alternativ auch in Form eines Klebemittels / Klebstoffes ausgeführt sein.

Zur Versorgung der Applikationsdüse 13 mit dem Applikationsmedium ist der Applikationskopf 2 weiterhin mittels einer hier der Übersichtlichkeit halber nicht weiter dargestellten Versorgungsleitung mit einer Pumpe bzw. einem Fluidtank weiter verbunden, sodass die Applikationsdüse 13 beim Einbringen des Applikationsmediums in den Schwächungsspalt 5 stetig mit dem Applikationsmedium versorgt wird.

Von dem Applikationskopf 2 aus erstreckt sich eine bogenartige / bügelartige Verbindungseinrichtung 9 der Applikationsvorrichtung 1 weg. Die Verbindungseinrichtung 9 ist hier lediglich vereinfacht dargestellt. Die Verbindungseinrichtung 9 erstreckt sich derart räumlich, dass sie sich um die Grundhalterung 10, in der die Abdeckung 4 aufgenommen ist, herum erstreckt. Auf einem dem Applikationskopf 2 abgewandten Ende der Verbindungseinrichtung 9 ist ein Auflager 3 angebracht. Das Auflager 3 ist zum Anlegen / Andrücken an der Abdeckung 4 vorgesehen. Die Verbindungseinrichtung 9 erstreckt sich derart um die Grundhalterung 10 sowie die Abdeckung 4 herum, dass der Applikationskopf 2 letztendlich im Applikationsmodus gemäß Fig. 1 auf einer ersten Seite 6 der Abdeckung 4, über dem Schwächungsspalt 5, angeordnet ist, während das Auflager 3 auf einer der ersten Seite 6 entgegengesetzten / gegenüberliegenden zweiten Seite 7 angeordnet ist. Die Verbindungseinrichtung 9 ist hier starr / als starre Kopplung ausgebildet, sodass Auflager 3 und Applikationskopf 2 in einem festen Abstand relativ zueinander angeordnet sind und unmittelbar miteinander gekoppelt sind. Somit ist, in anderen Worten ausgedrückt, zwischen dem Applikationskopf 2 und dem Auflager 3 eine mechanische Kopplung, insbesondere eine starre mechanische Kopplung, ausgebildet. Damit werden Auflager 3 und Applikationskopf 2 mittelbar oder unmittelbar über eine durch die Verbindungseinrichtung 9 gebildete mechanische Konstruktion miteinander verbunden, wobei - abgesehen von elastischen Effekten - keinerlei Abstandsänderung zwischen den beiden relevanten Teilen, nämlich des Auflagers 3 und des Applikationskopfes 2 eintreten kann. Eine solche Kopplung ist mittels eines Bügels in Form der Verbindungseinrichtung 9 erreicht, welcher Bügel mittelbar oder unmittelbar den Applikationskopf 2 und das Auflager 3 miteinander verbindet. Das Auflager 3 weist einen Wälzkörper in Form einer eine Wälzkugel 24 auf, mit dem es während des Einbringens des Applikationsmediums gegen die Abdeckung 4 gedrückt ist. Insbesondere ist die Wälzkugel 24 in diesem Ausführungsbeispiel nach Fig. 1 gegenüber der Verbindungseinrichtung 9 (mittels einer Federeinrichtung) federelastisch vorgespannt. Hierzu dient eine im Aufbau nicht näher dargestellte Andrückvorrichtung 8, die die Wälzkugel 24 elastisch gegen die Abdeckung 4 andrückt. Die Andrückvorrichtung 8 weist ein Federelement auf, das zwischen der Verbindungseinrichtung 9 und der Wälzkugel 24 eingespannt ist.

Somit ist stets eine Einrichtung vorgesehen, die eine kontinuierliche Auflage der Abdeckung 4 auf dem Auflager 3 sicherstellt. Eine solche Einrichtung kann in Form der Andrückvorrichtung 8 mittels eines elastischen Elements, beispielsweise einer Feder, erreicht werden, die beispielsweise die Kombination aus Auflager 3 und Applikationskopf 2 oder Schneidmesser gegen die Abdeckung 4 in eine Richtung vorspannt, so dass die Abdeckung 4 immer auf dem Auflager 3 anliegt. Als elastisches Element kann dabei auch die Abdeckung 4 selbst verwendet werden, wie in Hinblick auf das nachfolgend beschriebene Ausführungsbeispiel nach Fig. 6 erkennbar.

Schließlich ist der Ablauf des erfindungsgemäßen Verfahrens zum Einbringen des Applikationsmediums in den Schwächungsspalt 5 der Abdeckung 4, wobei der Schwächungsspalt 5 bereits zeitlich vor dem Einbringen des Applikationsmediums (in seiner Länge) vollständig in die Abdeckung 4 eingebracht worden ist, ebenfalls gut erkennbar. Zum einen wird die Abdeckung 4 prinzipiell bereitgestellt. Die Abdeckung 4 ist dann bereits mit einem in Fig. 1 in Zeichnungsebene hinein verlaufenden, vollständigen Schwächungsspalt 5 ausgestattet. Zum anderen wird die Applikationsvorrichtung 1 um die Abdeckung 4 herum angeordnet. Die Abdeckung 4 ist dann bereits beiderseits des Schwächungsspaltes 5 (Fig. 1) in der Grundhalterung fest angebracht / eingespannt. Das Auflager 3 wird gegen die zweite Seite 7 angelegt und derart angedrückt, dass zwei sich gegenüberliegende Flanken 14a und 14b des Schwächungsspaltes 5 oberhalb eines Auflagebereiches 22 aufklappen, d.h. sich im Wesentlichen V-förmig voneinander weg bewegt werden. Somit ist stets der Abschnitt des Schwächungsspaltes 5, der sich unmittelbar gegenüber dem Auflager 3 / dem Auflagebereich 22 befindet, in Richtung des Applikationskopfes 2 hin aufgeklappt / erweitert. Das Auflager 3 ist zusammen mit dem Applikationskopf 2, in Bezug auf den Schwächungsspalt 5, in einer Linie angeordnet. Insbesondere ist die Applikationsdüse 13 mit ihrem Austrittsloch in Verlängerung zum Auflager 3 hin gerichtet. Folglich wird beim Anlegen / Andrücken des Auflagers 3 an die zweite Seite 7 der Abdeckung 4, auf einer dem Auflager 3 gegenüberliegenden (ersten) Seite der Abdeckung 4 der Applikationskopf 2 mit seiner Applikationsdüse 13 exakt oberhalb des Schwächungsspaltes 5, d.h. mittig zu den aufgeklappten Flanken 14a und 14b angeordnet. Zur Vorbereitung des Einbringens des Applikationsmediums wird daher die Abdeckung 4 derart zwischen dem Applikationskopf 2 und dem Auflager 3 angeordnet, dass der Applikationskopf 2 auf einer dem Schwächungsspalt 5 aufweisenden ersten Seite 6 der Abdeckung 4 angeordnet ist und das Auflager 3 die Abdeckung von der zweiten Seite 7 her abstützt.

Im Anschluss daran wird das Applikationsmedium mittels der Applikationsdüse 13 / dem Applikationskopf 2 in den Schwächungsspalt 5 eingebracht. Der Applikationskopf 2 sowie das Auflager 3 werden dabei derart entlang der Erstreckung / Erstreckungslinie des Schwächungsspaltes 5 geführt, dass eine Relativbewegung zwischen der Abdeckung 4 und dem Applikationskopf 2 sowie dem Auflager 3 stattfindet. Währenddessen bleibt das Auflager 3 stets gegen die zweite Seite 7 angedrückt und somit der Schwächungsspalt 5 geöffnet. Das Applikationsmedium wird stets in dem oberhalb des Auflagers 3 befindlichen Abschnitt des Schwächungsspaltes 5 mittels des / der Applikationsdüse 13 appliziert.

Beim Einbringen des Applikationsmediums wird ein Abstand 15 zwischen dem Applikationskopf 2 und der Abdeckung 4 konstant gehalten. Wie in Fig. 2 angedeutet, ist der Abstand 15 jener direkter Abstand 15 zwischen einer der Abdeckung 4 zugewandten Auslassspitze 16 der Applikationsdüse 13 und einem festen Relativpunkt auf der ersten Seite 6 der Abdeckung 4. In Verbindung mit Fig. 2 ist das Entlangführen der Applikationsvorrichtung 1 entlang dem Schwächungsspalt 5 auch besonders gut erkennbar. Der Abstand 15 zwischen der Auslassspitze 16 der Applikationsdüse 13 und der Oberfläche / ersten Seite 6 der Abdeckung 4 (außerhalb des Schwächungsspaltes 5 gesehen) bleibt beim Führen der Applikationsvorrichtung 1 entlang dem Schwächungsspalt 5 gleich. Dies wird insbesondere durch eine gleichbleibende Anpresskraft des Auflagers 3 an die zweite Seite 7 der Abdeckung 4 ermöglicht. Um die nötige Gegenkraft gegen die Anpresskraft des Auflagers 3 aufzubringen, ist die Abdeckung 4 in einer Grundhalterung 10 eingespannt.

Der Schwächungsspalt 5 wird somit bevorzugt lediglich in dem dem Auflager 3 gegenüberliegenden Abschnitt vollständig aufklappt, wohingegen der weitere Schwächungsspalt 5 seitlich des Auflagers 5 weniger aufgeklappt ist oder gar nicht elastisch vorbelastet ist.

Selbstverständlich kann das Auflager 3 auch, nicht wie hier federelastisch, sondern starr mit der Verbindungseinrichtung 9 gekoppelt sein.

Des Weiteren ist es prinzipiell auch vorteilhaft, wenn mit dem Applikationskopf 2 eine Steuerungs- und/oder Regelungseinrichtung in dem erfindungsgemäßen Verfahren zusammenwirkt, die den Abstand 15 zwischen dem Applikationskopf 2 und der Abdeckung 4 konstant hält. Beispielsweise könnte diese eine Position des Applikationskopfes 2 sowie eine Position des Auflagers 3 oder der Abdeckung 4 ermitteln. Weicht dieser gemessene bzw. ermittelte Abstand von dem vorbestimmten Abstand ab, kann, bspw. durch entsprechendes Anheben oder Absenken des Bewegungsautomatenarmes 11 unmittelbar während des Applizierens der Abstand auf den vorbestimmten Abstand eingestellt / eingeregelt werden.

Die Erfindung betrifft zudem ein Verfahren zum Bearbeiten / Herstellen der Abdeckung 4, wobei dieses Verfahren das zuvor beschriebene Verfahren zum Einbringen des Applikationsmediums umfasst. Vor diesem Einbringverfahren wird dabei zunächst auf der ersten Seite 6 der Abdeckung 4 der Schwächungsspalt 5 mittels eines Trennwerkzeuges in Form eines Schneidwerkzeuges vollständig eingebracht / ausgeformt. Erst daran im Anschluss sowie nach Entfernen des Trennwerkzeuges von der Abdeckung 4 wird dann das Verfahren zum Einbringen des Applikationsmediums wie zuvor beschrieben umgesetzt.

In Verbindung mit den Fign. 3 bis 5 sind prinzipiell auch leicht modifizierte Ausführungsbeispiele der Applikationsvorrichtung 1 dargestellt, die prinzipiell wie die Applikationsvorrichtung 1 der Fig. 1 aufgebaut ist sowie funktioniert. Stets ist in diesen weiteren Ausführungsbeispielen das Auflager 3 sowie die mehrteilige Verbindungseinrichtung 9 prinzipiell unterschiedlich mit dem Applikationskopf 2 gekoppelt. Die Verbindungseinrichtung 9 ist in diesen Ausführungen jeweils mehrteilig ausgestaltet, wobei ein erster Bestandteil 17, der den Applikationskopf 2 aufweist, relativ zu einem zweiten Bestandteil 18, der das Auflager 3 aufnimmt, bewegbar / verfahrbar ist.

Gemäß Fig. 3 sind die beiden als Arme ausgebildeten Bestandteile 17, 18 bevorzugt über eine elektrische oder mechanische Koppelverbindung / -vorrichtung schwenkbar miteinander verbunden. Die Koppelverbindung / -vorrichtung ist wiederum Bestandteil der Steuerungs- und/oder Regelungseinrichtung, sodass im Betrieb der Abstand zwischen Auflager 3 und Applikationskopf 2 durch Ansteuern der Koppelverbindung / - vorrichtung / der Steuerungs- und/oder Regelungseinrichtung verschwenkt werden.

Gemäß Fig. 4 ist es jedoch auch möglich, eine fluidische, wie pneumatische oder hydraulische, Ansteuerung der beiden Bestandteile 17 und 18 vorzusehen. Hierbei ist ein pneumatischer Steuerzylinder 23 der Steuerungs- und/oder Regelungseinrichtung so zwischen den Bestandteilen 17 und 18 angebracht und die Bestandteile 17 und 18 so zueinander geführt, dass die Bestandteile 17 und 18 bei Aktivierung des Steuerzylinder 23 relativ zueinander verschoben werden.

In Fig. 5 ist der das Auflager 3 aufnehmende zweite Bestandteil 18 gegenüber dem Ausführungsbeispiel nach Fig. 4 ortsfest / raumfest, d.h. an einem raumfesten Bestandteil 19, angebracht.

In anderen Worten ausgedrückt, ist gemäß den vorteilhaften Ausführungsbeispielen der Fign. 3 bis 5 der durch die Verbindungseinrichtung 9 ausgebildete Bügel somit stets zumindest zweiteilig ausgebildet, wobei zwischen den beiden Bügelteilen / Bestandteilen 17, 18 eine bewegbare Kopplungseinrichtung vorgesehen ist, um eine Relativbewegung (Verfahren, Verschwenken) der beiden Bügelteile 17, 18 relativ zueinander zu ermöglichen. Eine solche Relativbewegung kann in Form einer Verschwenkung oder einer Verschiebung vorgesehen sein. Natürlich sind die beiden Bügelteile 17, 18 während der Durchführung des Applikationsvorganges - also des Medieneintrages - selbst gegeneinander festlegbar. Um eine Applikationsspur zu erzielen, d.h. entlang des Schwächungsspaltes das Applikationsmedium aufzubringen, sind Applikationskopf 2 und Abdeckung 4 relativ zueinander bewegbar. Dabei können entweder der Applikationskopf 2 alleine oder die Abdeckung 4 alleine, aber auch beide Elemente 2, 4 zugleich gegeneinander bewegt werden.

In anderen Worten ausgedrückt, ist es alternativ zu dem ersten Ausführungsbeispiel der Fign. 1 und 2, wobei eine starre Verbindung von Applikationskopf 2 und Auflager 3 umgesetzt ist, sinnvoll beide Elemente - Applikationskopf 2 und Auflager 3, die vorzugsweise zueinander verstellbar sind - so mittels der Steuerungs- und/oder Regelungseinrichtung relativ zueinander einzujustieren, dass der oben erwähnte vordefinierte Abstand 15 immer sichergestellt ist. Zu diesem Zweck ist jeweils in der Applikationsachse / Sprühachse die Position des Auflagers 3 und/oder die Position des Applikationskopfes 2 und/oder die Position der Abdeckung 4 zu erfassen. Die beiden Positionen werden dann der Steuer- und Regeleinrichtung zugeführt, die daraus den Abstand 15 zwischen der Auslassspitze 16 und dem Auflager 3 ermittelt. Entsprechend diesem Signal kann ein Antrieb entweder für den Applikationskopf 2 oder das Auflager 3 oder eventuell auch für beide Einrichtungen 2, 3 so angesteuert werden, dass in einem Regelverfahren der Abstand zur Erreichung eines gewünschten Applikationsabstandes 15 sicher eingestellt wird.

Gemäß Fig. 6, welche nicht Teil der Erfindung ist, ist es prinzipiell auch möglich, die Applikationsvorrichtung 1 zum Durchführen des Verfahrens mit einem Applikationskopf 2 sowie einem getrennt von dem Applikationskopf 2 ausgebildeten Auflager 3 zu versehen. Das Auflager 3 ist hierbei als eine separat von dem Applikationskopf 2 ausgebildete Grundplatte 20 / Auflageplatte eines Auflagetisches ausgeführt. Die Grundplatte 20 kann mit der Grundhalterung 10 direkt ausgestattet sein. Im vorliegenden Ausführungsbeispiel ist die Grundplatte 20 mit der Grundhalterung 10 direkt ausgestattet. Die Grundplatte 20 ist zudem gewölbt / konvex gewölbt ausgestaltet. Die Abdeckung 4 ist derart in der Grundhalterung 10 eingespannt, dass sie zumindest im Bereich des Schwächungsspaltes 5 auf der Grundplatte 20 ebenfalls mit der zweiten Seite 7 aufliegt. Eine Relativbewegung der Abdeckung 4 relativ zum Auflager 3 findet beim Aufbringen des Applikationsmediums vorzugsweise nicht statt, wobei lediglich der Applikationskopf 2 mittels des Bewegungsautomaten 11 entlang des Schwächungsspaltes 5 geführt wird. Alternativ ist es jedoch auch möglich, die Grundplatte 20 prinzipiell relativ zu der Abdeckung 4 zu bewegen. Somit wird in dieser Ausführung die Abdeckung 4 bereits bei Auflegen auf dem Auflager 3 selbst vorgespannt.

Des Weiteren, wie in Fig. 7, welche nicht Teil der Erfindung ist, angedeutet, ist es auch möglich auf die Grundplatte 20 zu verzichten und einen bewegbaren Abstützblock 21 vorzusehen. Der Abstützblock 21 ist dann in Richtung des Applikationskopfes 2 sowie wiederum weg von diesem Applikationskopf 2 verfahrbar. Dadurch können unterschiedliche Vorspannungszustände der Abdeckung 4 im Bereich des Schwächungsspaltes 5 umgesetzt werden. In dem Ausführungsbeispiel nach Fig. 7 sorgt eine zufahrbare Drückergeometrie anhand des Abstützblockes 21 in entsprechender geometrischer Ausführung dafür, dass der Schwächungsspalt 5 in der Abdeckung 4 derart geöffnet wird, dass über den gesamten Verlauf der Schwächungsspalt 5 zur Applikation des Applikationsmediums aufgebogen / -geklappt bereitliegt. Diese Drückergeometrie kann pneumatisch oder elektromechanisch in die Produktaufnahme von der A- Seite / zweiten Seite 7 der Abdeckung 4 zugefahren werden.

In anderen Worten ausgedrückt, wird somit in den weiteren nicht erfindungsgemäßen Ausführungsformen der Fign. 6 und 7 auf die mechanische Kopplung des Auflagers 3 mit dem Applikationskopf 2 über eine Werkzeugausführung verzichtet.

Alternativ kann, wie in Fig. 6 umgesetzt in einer Produktaufnahme, in der die Abdeckung 4 eingelegt wird, bereits eine erhabene Kontur enthalten sein. Dabei spannt eine Konturklemmmaske in Form der Grundhalterung 10 die Abdeckung 4 derart über die erhabene Kontur / Wulst / Wölbung auf, dass der Aufklappeffekt ohne Vakuumeinsatz erzielt werden kann. Weiter bevorzugt wird die Abdeckung 4 jedoch über ein Vakuum im direkten Umfeld der Kontur innerhalb der Produktaufnahme aufgespannt und der Schwächungsspalt 5 aufgeklappt.

### Bezugszeichenliste

- 1: Applikationsvorrichtung
- 2: Applikationseinrichtung / Applikationskopf
- 3: Auflager
- 4: Abdeckung
- 5: Schwächungsspalt
- 6: erste Seite
- 7: zweite Seite
- 8: Andrückvorrichtung
- 9: Verbindungseinrichtung
- 10: Grundhalterung
- 11: Bewegungsautomat
- 12: Arm
- 13: Applikationsdüse
- 14a: erste Flanke
- 14b: zweite Flanke
- 15: Abstand
- 16: Auslassspitze
- 17: erster Bestandteil
- 18: zweiter Bestandteil
- 19: raumfester Bestandteil
- 20: Grundplatte
- 21: Abstützblock
- 22: Auflagebereich
- 23: Steuerzylinder
- 24: Wälzkugel

## Patentansprüche

1. Verfahren zum Einbringen eines Applikationsmediums in einen Schwächungsspalt (5) einer Abdeckung (4), wie einer Abdeckfolie oder Abdeckhaut, wobei eine Abdeckung (4) zur Verfügung gestellt wird, die bereits auf einer ersten Seite (6) einen in seiner Länge vollständig ausgebildeten Schwächungsspalt (5) aufweist,
eine Applikationseinrichtung (2) zur ersten Seite (6) hin, beabstandet zur Abdeckung (4) sowie oberhalb des Schwächungsspaltes (5) positioniert wird, wobei ein Auflager (3) auf einer, der Applikationseinrichtung (2) abgewandten, zweiten Seite (7) der Abdeckung (4) abstützend angeordnet ist, und die Abdeckung (4) derart an dem Auflager (3) angelegt wird, dass der Schwächungsspalt (5) in einem Abschnitt, der einem an dem Auflager (3) angelegten Auflagebereich (22) gegenüberliegt, lokal in Richtung der Applikationseinrichtung (2) hin aufklappt, und ein Auftragen des Applikationsmediums durch die Applikationseinrichtung (2) in den Schwächungsspalt (5) hinein stattfindet,
**dadurch gekennzeichnet, dass**
das Auflager (3) einen Wälzkörper in Form einer Wälzkugel (24) aufweist, mit dem es während des Einbringens des Applikationsmediums gegen die Abdeckung (4) gedrückt ist und mit dem die Abdeckung (4) während des Einbringens des Applikationsmediums im wälzenden Kontakt steht.

2. Verfahren nach Anspruch 1, **dadurch gekennzeichnet, dass** das Auflager (3) federelastisch an die zweite Seite (7) der Abdeckung (4) angedrückt wird.

3. Verfahren nach Anspruch 1 oder 2, **dadurch gekennzeichnet, dass** das Applikationsmedium ein Trennmittel oder ein den Schwächungsspalt (5) vorübergehend zumindest teilweise wiederverschließendes Klebemittel ist.

4. Verfahren nach einem der Ansprüche 1 bis 3, **dadurch gekennzeichnet, dass** die Abdeckung (4) derart relativ zu der Applikationseinrichtung (2) und/oder die Applikationseinrichtung (2) derart relativ zu der Abdeckung (4) verschoben werden/wird, dass ein Abstand zwischen der Applikationseinrichtung (2) und der Abdeckung (4) in einem Verschiebeweg entlang des Schwächungsspaltes (5) konstant gehalten wird.

5. Verfahren nach Anspruch 4, **dadurch gekennzeichnet, dass** eine Steuerungs- und/oder Regelungseinrichtung vorhanden ist, die den Abstand zwischen der Applikationseinrichtung (2) und der Abdeckung (4) im Verschiebeweg entlang des Schwächungsspaltes (5) konstant hält.

6. Verfahren nach einem der Ansprüche 1 bis 5, **dadurch gekennzeichnet, dass** die Applikationseinrichtung (2) mittelbar oder unmittelbar mit dem Auflager (3) gekoppelt ist.

7. Verfahren zum Bearbeiten einer Abdeckung (4), wie einer Abdeckfolie oder Abdeckhaut, wobei
zunächst auf einer ersten Seite (6) der Abdeckung (4) ein Schwächungsspalt (5) mittels eines Trennwerkzeuges vollständig eingebracht wird,
und anschließend, nach Entfernen des Trennwerkzeuges von der Abdeckung (4), das Verfahren nach einem der Ansprüche 1 bis 6 durchgeführt wird.

## Claims

1. A method for introducing an application medium into a weakening gap (5) of a cover (4), such as a covering film or covering skin, wherein a cover (4) is provided which already has a weakening gap (5) formed completely over the length thereof on a first side (6),
an application arrangement (2) is positioned toward the first side (6), at a distance from the cover (4) and above the weakening gap (5), wherein a support (3) is arranged in a supporting manner on a second side (7) of the cover (4), facing away from the application arrangement (2), and the cover (4) is applied on the support (3) such that the weakening gap (5), in a portion which lies opposite a support region (22) applied on the support (3), opens up locally in the direction of the application arrangement (2), and an application of the application medium into the weakening gap (5) by the application arrangement (2) takes place,
**characterized in that**
the support (3) has a rolling body in the form of a rolling ball (24), by which it is pressed against the cover (4) during the introduction of the application medium, and with which the cover (4) is in rolling contact during the introduction of the application medium.

2. The method according to Claim 1, **characterized in that** the support (3) is pressed resiliently onto the second side (7) of the cover (4).

3. The method according to Claim 1 or 2, **characterized in that** the application medium is a separating medium or an adhesive means temporarily at least partly re-closing the weakening gap (5).

4. The method according to one of Claims 1 to 3, **characterized in that** the cover (4) is displaced relative to the application arrangement (2) and/or the application arrangement (2) is displaced relative to the cover (4) in such a way that a distance is kept constant between the application arrangement (2) and the cover (4) in a displacement path along the weakening gap (5).

5. The method according to Claim 4, **characterized in that** a controlling and/or regulating arrangement is present, which keeps constant the distance between the application arrangement (2) and the cover (4) in the displacement path along the weakening gap (5).

6. The method according to one of Claims 1 to 5, **characterized in that** the application arrangement (2) is coupled indirectly or directly with the support (3).

7. A method for processing a cover (4), such as a covering film or covering skin, wherein
firstly on a first side (6) of the cover (4) a weakening gap (5) is completely introduced by means of a separating tool,
and subsequently, after removal of the separating tool from the cover (4), the method is carried out according to one of Claims 1 to 6.

## Revendications

1. Procédé d'introduction d'un fluide d'application dans une fissure d'affaiblissement (5) d'un élément de recouvrement (4), comme un film de recouvrement ou une peau de recouvrement, dans lequel un élément de recouvrement (4) est fourni, qui présente déjà sur un premier côté (6) une fissure d'affaiblissement (5) formée entièrement sur sa longueur,
un dispositif d'application (2) orienté vers le premier côté (6), positionné à distance de l'élément de recouvrement (4) ainsi qu'au-dessus de la fissure d'affaiblissement (5), dans lequel un support (3) est disposé en appui sur un deuxième côté (7) de l'élément de recouvrement (4) détourné du dispositif d'application (2), et l'élément de recouvrement (4) est ainsi posé sur le support (3) que la fissure d'affaiblissement (5) s'ouvre localement en direction du dispositif d'application (2) dans un tronçon qui est opposé à une zone d'appui (22) aménagée sur le support (3), et le dispositif d'application (2) applique du fluide d'application dans la fissure d'affaiblissement (5) par le dispositif d'application,
**caractérisé en ce que**
le support (3) présente un corps de roulement sous forme d'une bille de roulement (24) avec laquelle il est appuyé contre l'élément de recouvrement (4) pendant l'introduction du fluide d'application et avec laquelle l'élément de recouvrement (4) reste en contact de roulement pendant l'introduction du fluide d'application.

2. Procédé selon la revendication 1, **caractérisé en ce que** le support (3) est appuyé avec une élasticité par ressort contre le deuxième côté (7) de l'élément de recouvrement (4).

3. Procédé selon la revendication 1 ou 2, **caractérisé en ce que** le fluide d'application est un fluide de démoulage ou un adhésif refermant au moins partiellement la fissure d'affaiblissement (5) provisoirement.

4. Procédé selon l'une des revendications 1 à 3, **caractérisé en ce que** l'élément de recouvrement (4) peut être ainsi repoussé par rapport au dispositif d'application (2) et/ou le dispositif d'application (2) peut être ainsi repoussé par rapport à l'élément de recouvrement (4) qu'un écart entre le dispositif d'application (2) et l'élément de recouvrement (4) est maintenu constant dans un trajet de déplacement le long de la fissure d'affaiblissement (5).

5. Procédé selon la revendication 4, **caractérisé en ce qu'**un dispositif de commande et/ou de régulation est présent qui maintient constant l'écart entre le dispositif d'application (2) et l'élément de recouvrement (4) dans le trajet de déplacement le long de la fissure d'affaiblissement (5).

6. Procédé selon l'une des revendications 1 à 5, **caractérisé en ce que** le dispositif d'application (2) est couplé directement ou indirectement au support (3).

7. Procédé de traitement d'un élément de recouvrement (4) comme un film de recouvrement ou une peau de recouvrement, dans lequel
une fissure d'affaiblissement (5) est d'abord introduite entièrement sur un premier côté (6) de l'élément de recouvrement (4) au moyen d'un outil de séparation,
et ensuite, après le retrait de l'outil de séparation de l'élément de recouvrement (4), le procédé est exécuté selon l'une des revendications 1 à 6.
